# EUROPEAN PATENT APPLICATION

(11) **EP 3 456 783 A1**
(43) Date of publication of application: **20.03.2019**
(21) Application number: 16900774.7
(22) Date of filing: 27.07.2016
(51) Int. Cl.: C08L 75/04, C08G 18/42, C08G 18/72, C08G 18/34, C08J 9/04, C08J 3/24

(54) **THERMOPLASTIC POLYURETHANE HAVING CROSS-LINKING SITE, AND CROSS-LINKING FOAMING METHOD USING SAME**

(30) Priority: 11.05.2016 KR 20167057655
(71) Applicant: Dongsung Corporation, Busan 49421 (KR)
(72) Inventor: NAM, Sang Chul, Busan 49497 (KR); LEE, Sang Yun, Ulsan 44755 (KR); HAN, Dae Sang, Ulju-gun Ulsan 44930 (KR); UM, Gi Yong, Busan 47135 (KR); BAE, Jong Woo, Busan 47871 (KR); SHIN, Jin Ho, Busan 48435 (KR); KIM, Seong-Hye, Busan 47155 (KR)
(74) Representative: Stolmár & Partner Patentanwälte PartG mbB
(86) International application number: PCT/KR2016/008182
(87) International publication number: WO 2017/195934

(57) **Abstract**

The present invention relates to a thermoplastic polyurethane composition imparted with crosslinking sites, which comprise a thermoplastic polyurethane containing crosslinking sites incorporated into the molecule of a polyol and/or a chain extender. The thermoplastic polyurethane composition has an easy-to-process viscosity at a processing temperature of about 130°C or below in a low-temperature foaming process that is performed using an existing EVA crosslinking/foaming system. Thus, the thermoplastic polyurethane composition may be easily mixed with a crosslinking agent, a foaming agent and various additives, and when it is press-molded or injection-molded to provide a crosslinked foam, foam cells are easily formed by the crosslinking sites incorporated into the molecule of the polyol and/or the chain extender. In addition, a foam produced using the thermoplastic polyurethane composition has excellent mechanical properties and also has varying specific gravities depending on the amount of the foaming agent used.

## Description

### TECHNICAL FIELD

The present invention relates to a thermoplastic polyurethane composition imparted with crosslinking sites, which comprises a thermoplastic polyurethane containing crosslinking sites incorporated into the molecule of a polyol and/or a chain extender, is easily mixed with a crosslinking agent, a foaming agent and various additives in an existing EVA crosslinking/foaming system, and can be press-molded or injection-molded to produce foams having varying specific gravities depending on the amount of the foaming agent used.

### BACKGROUND ART

When general thermoplastic polyurethane (TPU) is applied to a system for crosslinking and foaming ethylene vinyl acetate (hereinafter referred to as "EVA"), there is a problem in that it is difficult to perform the foaming process, because the TPU has an excessively high melt viscosity at a temperature of about 130°C or below, at which resins, a crosslinking agent and various additives are uniformly mixed.

Furthermore, general thermoplastic polyurethane (TPU) has a very low content of crosslinking sites in its molecule, leading to no increase in viscosity of the melted polymer by a crosslinking agent. Thus, when thermoplastic polyurethane resin is heated to above a certain temperature at which decomposition of a foaming agent occurs, the viscosity of the thermoplastic polyurethane resin is reduced so that the thermoplastic polyurethane resin cannot be impregnated with gas. In addition, in this case, it is not easy to form foam cells, and the resin is likely to be decomposed in the crosslinking/foaming process.

Typical thermoplastic polyurethane (TPU), a linear polymer having a urethane bond in its molecule, is produced by a reaction between a long-chain polyol (1), a short-chain chain extender (2) and a polyisocyanate (3), and shows proper elasticity due to phase separation between a hard segment and a soft segment. The hard segment formed by bonding between the short-chain chain extender and the polyisocyanate serves to provide heat resistance and mechanical strength, and the soft segment formed by bonding between the long-chain polyol and the short-chain chain extender serves to provide low-temperature characteristics and chemical resistance.

The long-chain polyol (1) that is generally used for production of such typical thermoplastic polyurethane can be largely divided into polyester polyol and polyether polyol. Examples of polyester polyol include lactone-based polyester polyols and adipic acid-based polyester polyols. The adipic acid-based polyester polyol is produced by polymerization of a polyfunctional carboxylic acid compound with a polyfunctional alcohol compound. As the polyfunctional carboxylic acid, adipic acid is used, and as the polyfunctional alcohol compound, diol or triol is used. Polyether polyol is produced by adding propylene oxide (PO) or ethylene oxide (EO) to an initiator having two or more active hydrogen atoms (-OH, NH₂), and examples thereof include polyethylene glycol, polypropylene glycol, polytetramethylene glycol, and copolymers thereof. Furthermore, polyether polyol has excellent hydrolysis resistance and low-temperature characteristics.

In addition, the short-chain chain extender (2) may include diols, including ethylene glycol, diethylene glycol, butanediol and hexandiol, triols, including trimethylol propane and the like, polytetramethylene glycol, or mixtures of two or more thereof.

In addition, the polyisocyanate (3) may be identical or similar to a polyisocyanate that is generally used in the production of polyurethane, and it can be largely divided into aromatic isocyanate, aliphatic isocyanate and alicyclic isocyanate. The polyisocyanate (3) that can be used in the present invention may be selected from the group consisting of diphenyl methane diisocyanate (MDI), tolunene diisocyanate (TDI), hexamethylene diisocyanate (HDI), dicyclohexylmethane diisocyanate (H12MDI), and mixtures of two or more thereof.

Production of typical thermoplastic polyurethane as described above is performed such that the reaction ratio between polyisocyanate, polyol and chain extender [NCO/OH equivalent ratio] is in the range of 0.990 to 1.030, in view of mechanical strength and moldability in the injection and extrusion fields to which most thermoplastic polyurethanes are applied.

Thermoplastic polyurethane produced at this reaction ratio is used without any problem. However, when the thermoplastic polyurethane is applied to an EVA crosslinking/foaming system, it will have an excessively high melt viscosity, and thus will be difficult to process at a temperature of about 130°C or below, at which resins, a crosslinking agent and various additives are uniformly mixed. Furthermore, since it is not uniformly mixed and not completely melted, it will form protrusions or pin-holes on the surface of foam. In addition, typical thermoplastic polyurethane consisting only of polyol, chain extender and polyisocyanate as described above has a very low content of crosslinking sites compared to EVA, the increase in viscosity of the melted polymer by a crosslinking agent does not occur. Thus, when thermoplastic polyurethane resin is heated to above a certain temperature at which decomposition of a foaming agent occurs, the viscosity of the thermoplastic polyurethane resin is reduced so that the thermoplastic polyurethane resin cannot be impregnated with gas. In addition, in this case, it is not easy to form foam cells, and the resin is likely to be decomposed in the crosslinking/foaming process. For these reasons, thermoplastic polyurethane that may be applied to an EVA cross-linking/foaming system is required to have properly low melt viscosity during processing so that it can be uniformly mixed with a crosslinking agent, a foaming agent and various additives. In addition, it is required that the melt viscosity thereof be increased by cross-linking during crosslinking/foaming.

Meanwhile, Korean Patent No. 10-0611686 (registered on August 4, 2006) discloses expanded thermoplastic polyurethane. The expanded thermoplastic polyurethane disclosed in Korean Patent No. 10-0611686 (registered on August 4, 2006) is excellent in terms of physical properties, including elasticity, elastic modulus and elongation, compared to a technology in which foaming of thermoplastic polyurethane is performed in the presence of heat-expandable microspheres, and a polyurethane foam produced by a method for producing thermoplastic polyurethane foam as disclosed in Korean Patent No. 10-0652130 (registered on November 23, 2006). Thus, it is advantageously used in many industrial fields. However, the expanded thermoplastic polyurethane disclosed in Korean Patent No. 10-0611686 (registered on August 4, 2006), and the thermoplastic polyurethane foam produced by the method for producing thermoplastic polyurethane foam disclosed in Korean Patent No. 10-0652130 (registered on November 23, 2006) are non-crosslinked foams which are produced using heat-expandable microspheres or a powdery foaming agent, and thus cannot properly exhibit compression set and mechanical properties, unlike crosslinked foams.

Therefore, for the reasons as described above, there is an urgent need to develop a thermoplastic polyurethane which has properly low melt viscosity during processing so that it can be uniformly mixed with a crosslinking agent, a foaming agent and various additives and can be applied to an existing EVA crosslinking/foaming system, and the melt index of which is properly increased by crosslinking during a crosslinking/foaming process.

### DISCLOSURE OF INVENTION

### TECHNICAL PROBLEM

Accordingly, the present invention has been made in order to solve the above-described problems occurring in the prior art, and it is an object of the present invention is to provide a thermoplastic polyurethane composition imparted with crosslinking sites, which comprises a thermoplastic polyurethane which contains crosslinking site incorporated into the molecule of a polyol and/or a chain extender, and has an easy-to-process viscosity in a low-temperature foaming process performed using an existing EVA crosslinking/foaming system so that the composition can be easily mixed with a crosslinking agent, a foaming agent and various additives to thereby easily form a foam.

Another object of the present invention is to provide a thermoplastic polyurethane composition imparted with crosslinking sites, in which when the composition is press-molded or injection-molded to provide a crosslinked foam, foam cells are easily formed by the crosslinking sites incorporated into the molecule of the polyol and/or the chain extender, and which allows for production of a foam having excellent mechanical properties and also having varying specific gravities depending on the amount of the foaming agent used.

### TECHNICAL SOLUTION

To achieve the above objects, in one aspect, the present invention provides a thermoplastic polyurethane composition imparted with crosslinking sites, which comprises a long-chain polyol, a short-chain chain extender and a polyisocyanate, characterized in that the thermoplastic polyurethane composition contains a crosslinking site-imparting compound.

In the present invention, the crosslinking site-imparting compound may be a crosslinking site-imparting polyol or a crosslinking site-imparting chain extender, which has at least one ethylenically unsaturated group in its molecular side chain and contains a carbon-carbon double bond, and the ethylenically unsaturated group may be an acryl group or an acryloyl group.

In another aspect, the present invention provides a method for producing a crosslinked foam using a thermoplastic polyurethane imparted with crosslinking sites, the method comprising the steps of: melt-mixing a thermoplastic polyurethane with a softener and a filler, which are heat-stable additives, at a temperature of 90 to 130°C to prepare a first mixture; dispersing a crosslinking agent and a foaming agent, which are heat-sensitive additives, in the first mixture at a temperature of 80 to 110°C to prepare a second mixture; processing the second mixture into a sheet- or pellet-shaped compound; and press- or injection-molding the compound to produce a foam.

### ADVANTAGEOUS EFFECTS

The present invention provides a thermoplastic polyurethane composition comprising a thermoplastic polyurethane which contains crosslinking site incorporated into the molecule of a polyol and/or a chain extender. The thermoplastic polyurethane composition according to the present invention has an easy-to-process viscosity at a processing temperature of about 130°C or below in a low-temperature foaming process that is performed using an existing EVA crosslinking/foaming system. Thus, the thermoplastic polyurethane composition can be easily mixed with a crosslinking agent, a foaming agent and various additives, and when it is press-molded or injection-molded to provide a crosslinked foam, foam cells are easily formed by the crosslinking sites incorporated into the molecule of the polyol and/or the chain extender. In addition, a foam produced using the thermoplastic polyurethane composition has excellent mechanical properties and also has varying specific gravities depending on the amount of the foaming agent used.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 depicts photographs showing the appearances of thermoplastic polyurethanes according to the present invention and thermoplastic polyurethanes according to Comparative Examples after mixing; and.
FIG. 2 depicts graphs showing the cross-linking properties of foams obtained using thermoplastic polyurethanes according to the present invention and foams obtained according to Comparative Examples.

### BEST MODE FOR CARRYING OUT THE INVENTION

Hereinafter, a thermoplastic polyurethane composition imparted with crosslinking sites according to a preferred embodiment of the present invention will be described in further detail with reference to the accompanying drawings and examples. In the meantime, in the detailed description and the accompanying drawings, illustration and explanation on the construction and operation which those skilled in the general art of producing thermoplastic polyurethane can easily understand will be briefly made or will be omitted to avoid redundancy.

### 1. Thermoplastic Polyurethane (TPU) Imparted with Crosslinking sites

A thermoplastic polyurethane (TPU) composition imparted with crosslinking sites according to the present invention comprises a long-chain polyol, a short-chain chain extender and a polyisocyanate, and contains a crosslinking site-imparting compound.

When conventional thermoplastic polyurethane (TPU) is produced using only three components, that is, a long-chain polyol, a short-chain chain extender and a polyisocyanate, there is a problem in that, because the long-chain polyol is a saturated polyol and the short-chain chain extender is a saturated chain extender, it is difficult to obtain proper melt viscosity by crosslinking during the crosslinking/foaming process, due to the properties as described in the Background Art section above, and thus mixing is not properly performed, making it impossible to form foam.

For this reason, in the thermoplastic polyurethane composition according to the present invention, a crosslinking site-imparting compound is added to a polyol and/or a chain extender so that proper melt viscosity can be obtained by a cross-linked structure formed by reaction with a crosslinking agent that is used in an existing EVA crosslinking/foaming system. Thus, the melt viscosity of the resulting thermoplastic polyurethane (TPU) can be reduced so that the thermoplastic polyurethane (TPU) can be easily mixed with various additives. In addition, by using a suitable amount of a crosslinking agent in an existing EVA cross-linking system, foam having preferred physical properties can be produced.

If the polyol that is used in the present invention is a saturated polyol, the chain extender may be selected from among a crosslinking site-imparting chain extender and a mixture of a saturated chain extender and a crosslinking site-imparting chain extender.

If the polyol that is used in the present invention is a mixture of a saturated polyol and a crosslinking site-imparting polyol, the chain extender may be selected from among a saturated chain extender, a crosslinking site-imparting chain extender, and a mixture of a saturated chain extender and a crosslinking site-imparting chain extender.

The crosslinking site-imparting compound is a crosslinking site-imparting polyol or a crosslinking site-imparting chain extender, which has at least one ethylenically unsaturated group in its molecular side chain and contains a carbon-carbon double bond. Specifically, the ethylenically unsaturated group may be an acryl group or an acryloyl group.

For reference, the compounds as described above are named "unsaturated polyol" and "unsaturated chain extender", respectively. As used herein, the terms "unsaturated polyol" and "unsaturated chain extender" mean a polyol and a chain extender, respectively, which each consists of an unsaturated compound, and as used herein, the term "saturated polyol" and "saturated chain extender" mean a polyol and a chain extender, respectively, which each consists of a saturated compound. The terms "crosslinking site-imparting polyol" and "crosslinking site-imparting chain extender" mean a crosslinkable unsaturated polyol and a crosslinkable unsaturated chain extender, respectively.

The content of the unsaturated polyol or the unsaturated chain extender, which is the crosslinking site-imparting compound, may influence the amount of crosslinking agent added during processing, the formation of proper melt viscosity required for preferable foaming, and the stability of the resulting foam.

Hereinafter, each component of the thermoplastic polyurethane composition according to the present invention will be described in detail.

### (1) Polyol

The polyol that is used in the present invention is used in two types of methods: a type A method in which a saturated polyol is used alone in the production of conventional thermoplastic polyurethane; and a type B method in which a polyol compound is used which is a mixture of a saturated polyol and an unsaturated polyol that imparts crosslinking sites into the molecule of thermoplastic polyurethane.

In the type B method, the content of the crosslinking site-imparting unsaturated polyol in the mixture of the saturated polyol and the unsaturated polyol is preferably 1-30 mol%, more preferably 5-20 mol%, based on the total moles of the polyols (saturated polyol + unsaturated polyol). The content of the unsaturated polyol may influence the amount of crosslinking agent added during processing, the formation of proper melt viscosity required for preferable foaming, and the stability of the resulting foam.

Thus, if the content of the unsaturated polyol is less than the lower limit of the above-specified range, formation of a cross-linked structure will be insufficient so that proper melt viscosity during the crosslinking/foaming process cannot be obtained, and if the content of the unsaturated polyol is more than the upper limit of the above-specified range, formation of preferred foam cells will be difficult, and foam cells may change with time due to their low stability.

The unsaturated polyol is a polyol that has at least one ethylenically unsaturated group in its molecular side chain and contains a carbon-carbon double bond. It serves to impart crosslinking sites to thermoplastic polyurethane, and is crosslinked to thermoplastic polyurethane by reaction with a crosslinking agent.

The saturated polyol that is generally used in the present invention is divided into a polyester polyol and a polyether polyol.

### (A) Saturated Polyol

The polyester polyol is a random polyester polyol produced by an addition reaction between at least one polyfunctional carboxylic acid compound or an anhydride thereof, selected from among sebacic acid (SA), adipic acid (AA), sbelic acid, abelic acid, azelic acid, dodecandioic acid, trimeric acid, terephthalic acid, and phthalic anhydride, and at least one polyfunctional alcohol compound selected from diols, including ethylene glycol, diethylene glycol, butanediol (butylene glycol) and hexandiol, and triols, including trimethylol propane and the like.

In addition, the polyether polyol is produced by propylene oxide (PO) or ethylene oxide (EO) to an initiator having two or more active hydrogen atoms (-OH, NH₂), and may be one or more selected from among polyethylene glycol, polypropylene glycol, polytetramethylene glycol, and copolymers thereof.

A preferred saturated polyester polyol that is used in the present invention may be a random polyester polyol having a hydroxyl value of 37.40 to 224.44 mg KOH/g, which is produced by an addition reaction between adipic acid and butanediol, ethylene glycol, diethylene glycol, a polytetramethylene glycol having a number-average molecular weight of 600 or less, and mixtures thereof. However, one of polyether polyol, a polytetramethylene glycol having a hydroxyl value of 37.40 to 187.03 mg KOH/g is more preferably used in view of the hydrolysis resistance and elasticity of the resulting foam. If the hydroxyl value is lower than the lower limit of the above-specified range, the physical properties and processability of the synthesized thermoplastic polyurethane or a foam obtained by foaming using the same may be reduced.

### (B) Unsaturated Polyol

As the unsaturated polyol that imparts crosslinking sites to thermoplastic polyurethane, an unsaturated polyester polyol may be used, which has two hydroxyl groups in the molecule and a number-average molecular weight of 500 to 6,000, and is generally used in the production of unsaturated polyurethane.

The most preferred unsaturated polyol that is used in the present invention may be a polybutadiene diol which shows high reactivity and contains a primary allylic alcohol group and which has a number-average molecular weight of 1,000 to 4,000. The content of the unsaturated polyol is preferably 1-30 mol%, more preferably 5-20 mol%, based on the total moles of the long-chain polyol.

If the content of the unsaturated polyol is less than the lower limit of the above-specified range, formation of a cross-linked structure will be insufficient so that proper melt viscosity during the crosslinking/foaming process cannot be obtained, and if the content of the unsaturated polyol is more than the upper limit of the above-specified range, formation of preferred foam cells will be difficult, and foam cells may change with time due to their low stability.

The unsaturated polyester polyol is a compound produced by reacting saturated carboxylic acid and unsaturated carboxylic acid with polyfunctional alcohol at a certain ratio so as to have at least one unsaturated bond in the main chain. Herein, each of the polyfunctional alcohol and the saturated carboxylic acid may be at least one or a mixture of two or more selected from among those described above with respect to the saturated polyol, and the unsaturated carboxylic acid may be one or more selected from among fumaric acid, maleic acid, maleic anhydride, citraconic acid and itaconic acid.

### (2) Chain Extender

The chain extender that is used in the present invention comprises a saturated chain extender that is generally used in the production of thermoplastic polyurethane, and an unsaturated chain extender, i.e., a compound that imparts crosslinking sites into the molecule of thermoplastic polyurethane.

In the present invention, the content of the unsaturated chain extender varies depending on whether or not the unsaturated polyol that imparts crosslinking sites is used in the polyol compound of (1) above.

Specifically, where only the saturated polyol is used as the polyol compound (A type), the content of the unsaturated chain extender is preferably 20 to 100 mol% based on the total moles of the chain extenders (saturated chain extender + unsaturated chain extender). Where a mixture of the saturated polyol and the unsaturated polyol is used (B type), the content of the unsaturated chain extender is preferably 0 to 75 mol% based on total moles of the chain extenders (saturated chain extender + unsaturated chain extender). Specifically, the content of the unsaturated chain extender is more preferably 0 to 75 mol%.

The content of the unsaturated polyol or the unsaturated chain extender may influence the amount of crosslinking agent added during processing, the formation of proper melt viscosity required for preferable foaming, and the stability of the resulting foam. Thus, if the content of the unsaturated polyol is out of the above-specified range, formation of a cross-linked structure will be insufficient so that proper melt viscosity during the crosslinking/foaming process cannot be obtained. Furthermore, in this case, formation of preferred foam cells will be difficult, and foam cells may change with time due to their low stability.

The unsaturated chain extender is a chain extender that has at least one ethylenically unsaturated group in its molecular side chain and contains a carbon-carbon double bond. It serves to impart crosslinking sites to thermoplastic polyurethane, and is crosslinked to thermoplastic polyurethane by reaction with a crosslinking agent.

### (A) Saturated Chain Extender

The saturated chain extender contains two or more active hydrogen atoms, and may be one or more selected from among diols, including ethylene glycol, diethylene glycol, butanediol and hexandiol, triols, including trimethylol propane and the like, and polytetramethylene glycol. More preferably, the saturated chain extender is diethylene glycol, tripropylene glycol, butane diol or the like.

### (B) Unsaturated Chain Extender

The unsaturated chain extender that imparts crosslinking sites to thermoplastic polyurethane is a low-molecular-weight polyol containing an ethylenically unsaturated group, particularly an allyl group or an acryloyl group, and having a number-average molecular weight of 500 or less. For example, the unsaturated chain extender may be one or more selected from among glycerol monoallyl ether (GAE), trimethylolpropane monoallyl ether (TMPME), glycerol monoacrylate, trimethylolpropane monoacrylate and similar compounds, which contain an unsaturated group in C₄-C₂₀ aliphatic polyol. Alternatively, it may be one or more selected from among alkylene oxide and allyl glycidyl ether (AGE) adducts of C₂-C₁₂ polyol. The most preferred unsaturated chain extender that is used in the present invention may be one or more selected from among glycerol monoallyl ether (GAE) and trimethylolpropane monoallyl ether (TMPME), which have two hydroxyl groups and one aryl group in the side chain.

### (3) Polyisocyanate

Polyisocyanate (3) may be identical or similar to a polyisocyanate that is generally used in the production of polyurethane. It may be largely divided into aromatic isocyanate and aliphatic or alicyclic isocyanate.

The aromatic isocyanate may be one or more selected from among diphenyl methane diisocyanate (MDI), tolunene diisocyanate (TDI), Tolidine diisocyanate (TODI), phenylene diisocyanate (PPDI), and naphthalene diisocyanate (NDI).

Where the aliphatic or alicyclic isocyanate is used for the purpose of preventing the resulting foam from being discolored by sunlight, one or more may be selected from among hexamethylene diisocyanate (HDI), dicyclohexylmethane diisocyanate (H12MDI), and isophorone diisocyanate (IPDI).

The preferred polyisocyanate (2) that is used in the present invention may be one or more selected from among diphenyl methane diisocyanate (MDI), toluene diisocyanate (TDI), and hexamethylene diisocyanate (HDI), which are suitable for use in the production of typical thermoplastic polyurethane.

The resulting foam obtained using a polyisocyanate having high melting point, such as naphthalene diisocyanate (NDI), is known to show good mechanical properties and set compression. However, the polyisocyanate has an excessively high melting point (130°C) upon its application in the production of typical thermoplastic polyurethane, and thus is not easy to apply and may have low processability. For this reason, the choice of a polyisocyanate having a proper melting point is required.

Furthermore, in the case of aliphatic or alicyclic isocyanate, when a crosslinking is used in the same amount as that in the case of aromatic isocyanate, the crosslinking property thereof is definitely reduced. For this reason, it is required to use a large amount of a crosslinking agent or increase the content of a compound containing an ethylenically unsaturated group.

In the present invention, hexamethylene diisocyanate (HDI) selected from aliphatic isocyanates can improve the light-resistant and elastic properties of the resulting foam.

Meanwhile, in the production of general thermoplastic polyurethane, the reaction ratio between an isocyanate component and polyol and chain extender components [NCO/OH] is limited to the range of 0.990 to 1.03, except for special cases, in view of mechanical strength, moldability and the like. However, thermoplastic polyurethane produced at this reaction ratio has an excessively high melt viscosity, and thus cannot be processed at a general EVA crosslinking/foaming temperature of 130°C or cannot be uniformly mixed, thus forming protrusions or pin-holes on the surface of the resulting foam.

For this reason, in the production of a thermoplastic polyurethane suitable for use in a crosslinking/foaming process according to the present invention, the reaction ratio between an isocyanate component and polyol and chain extender components [NCO/OH] is preferably 0.85-1.00, more preferably 0.90-0.98, in view of the mechanical strength and moldability of the resulting foam. If reaction ratio is out of the above-specified range, the mechanical strength and moldability of the foam may be decreased.

### 2. Production of Thermoplastic Polyurethane (TPU) Imparted with Crosslinking sites

Hereinafter, a method for production of a thermoplastic polyurethane imparted with crosslinking sites according to the present invention will be described.

A method for production of a thermoplastic polyurethane imparted with crosslinking sites according to the present invention comprises the steps of: mixing 20 to 75 parts by weight of a polyol with 5 to 40 parts by weight of a chain extender with stirring at a temperature of 30 to 100°C for 1 to 10 minutes to obtain a mixture (first mixing step); adding 10 to 60 parts by weight of an isocyanate to the mixture, followed by mixing at a speed of 300 to 1,000 rpm for 1 to 10 minutes (second mixing step); aging a product resulting from the second mixing step at a temperature of 60 to 140°C for 1 to 12 hours; crushing a product resulting from the aging step at room temperature; and extruding resulting from the crushing step at a temperature of 100 to 250°C. The temperature, time and stirring speed conditions in the first and second steps and the aging step need to be controlled depending on the viscosity of polyol used and the reaction rate of isocyanate, and the extrusion temperature should also be controlled depending on the melting temperature of the obtained product.

In the first mixing step, a thermoplastic polyurethane composition used is a compound in which a crosslinking site-imparting compound is added to the polyol and the chain extender, and 20 to 75 parts by weight of the polyol is mixed with 5 to 40 parts by weight of the chain extender. If the contents of the polyol and the chain extender are out of the above-specified ranges, productionability and workability may be deteriorated and satisfactory physical properties may not be obtained.

The thermoplastic polyurethane is either a thermoplastic polyurethane imparted with crosslinking sites by adding a crosslinking site-imparting compound to the chain extender, or a thermoplastic polyurethane imparted with crosslinking sites by adding a crosslinking site-imparting compound to each of the polyol and the chain extender.

Furthermore, the unsaturated polyol is preferably used in an amount of 5 to 20 mol% based on the total moles of the polyol, and the chain extender is preferably used in an amount of 20 to 75 mol% based on the total moles of the chain extender. If the amount of polyol or chain extender used is more than the upper limit of the above-specified range, formation of preferred foam cells will be difficult, and foam cells may change with time due to their low stability.

It can be understood that the first mixing step of mixing the polyol compound with the chain extender, and the second mixing step is a step of adding the isocyanate compound to substantially produce polyurethane. Particularly, when the molecular weight of the reaction product polyurethane obtained by aging the mixture of the second mixing step is controlled, a thermoplastic polyurethane which is easy to process can be obtained even in a general EVA crosslinking/foaming system. Then, the reaction product polyurethane may be formed into pellets through crushing and extrusion processes. In addition, the reaction product polyurethane in a slab state may also be cut to a suitable size without performing a crushing process.

The thermoplastic polyurethane according to the present invention may show a decrease in its physical properties suitable for the intended use, when the process conditions (e.g., temperature, time and the like) used in the processes such as mixing, aging and extrusion processes are out of the above-specified ranges.

The thermoplastic polyurethane resin composition of the present invention may further include, as typical additives, 0.1 to 1.0 parts by weight of first and second antioxidants for ensuring heat resistance during processing, 0.1 to 3.0 parts by weight of a hydrolytic stabilizer for suppressing hydrolysis of the resulting foam, 0.5 to 1.0 parts by weight of an external lubricant for improving workability such as anti-blocking property, and 1 to 5 parts by weight of an internal lubricant for uniform mixture depending on the use purpose. If the contents of the additives are out of the above-specified ranges, the inherent physical properties according to the kind of the additives may be deteriorated.

### 3. Foaming of Thermoplastic Polyurethane (TPU)

Meanwhile, a method for producing a crosslinked foam using a thermoplastic polyurethane imparted with crosslinking sites according to the present invention will be described in detail.

In a conventional process for producing EVA-based foams, resins are subjected to first and second mixing processes to obtain a product suitable for a molding device. The product is put in a mold, and heat and pressure are added to the mold for a certain period of time to induce chemical crosslinking and decomposition of a foaming agent. Then, the pressure applied to the mold is removed, and thus the foam is expanded by the high pressure of foaming agent decomposing gas formed therein.

A method for producing a crosslinked foam using a thermoplastic polyurethane imparted with crosslinking sites according to the present invention comprises the steps of: melt-mixing a thermoplastic polyurethane with a softener and a filler, which are heat-stable additives, at a temperature of 90 to 130°C to prepare a first mixture; dispersing a crosslinking agent and a foaming agent, which are heat-sensitive additives, in the first mixture at a temperature of 80 to 110°C to prepare a second mixture; processing the second mixture into a sheet- or pellet-shaped compound; and press- or injection-molding the compound to produce a foam.

The first mixing step is a step of melt-mixing a polymer material with non-heat-sensitive additives in a closed type mixer such as a kneader to prepare a first mixture. If the first mixing step is performed at a temperature lower than the lower limit of the above-specified temperature range, the thermoplastic polyurethane may not be properly melted and sufficiently mixed. In the first mixing step, a closed type mixer or an open type mixer is generally heated by steam, and the maximum heating temperature does not exceed 130°C.

The additives that are mixed in the first mixing step are conventional additives. Specifically, for the purpose of increasing dispersibility during foaming of the thermoplastic polyurethane, a softener such as stearic acid is added in an amount of 0.3 to 0.5 parts by weight based on 100 parts by weight of the thermoplastic polyurethane. For the purpose of enhancing the mechanical properties (such as tensile strength, hardness and the like) of the resulting foam, a filler such as calcium or magnesium carbonate is added in an amount of 5 to 12 parts by weight based on 100 parts by weight of the thermoplastic polyurethane. For the purpose of enhancing foaming, a foaming aid such as zinc oxide is added in an amount of 1 to 5 parts by weight based on 100 parts by weight of the thermoplastic polyurethane. If the content of the softener added is out of the above specified range, dispersibility during foaming of the thermoplastic polyurethane may be decreased. If the content of the filler added is out of the above specified range, the mechanical properties (such as tensile strength, hardness and the like) of the resulting foam may not be properly obtained. If the content of the foaming aid added is out of the above specified range, foaming may not be completely achieved and thus the mechanical properties of the resulting foam may not be properly obtained.

The second mixing step is a step of dispersing a crosslinking agent and a foaming agent, which are heat-sensitive additives, in the first mixture in an open type mixer such as roll mill, thereby preparing a second mixture.

The closed type mixer or the open type mixer, which is used in the first and second mixing steps, is generally heated by steam, and the mixing process should be performed at a temperature of up to 90 to 130°C. Generally, mixing in the closed type mixer that is used in the first mixing step is performed at a temperature of 130°C or below, and mixing in the open type mixer that is used in the second mixing step is performed at a temperature of 80 to 110°C in view of the heat sensitivity of the crosslinking agent and the foaming agent.

In the present invention, preferably, the contents of a crosslinking agent and a foaming agent added to the thermoplastic polyurethane are 0.2 to 1.5 parts by weight and 1 to 12 parts by weight, respectively, based on 100 parts by weight of the thermoplastic polyurethane. If the contents of the crosslinking agent and the foaming agent are out of the above-specified ranges, sufficient crosslinking or foaming may not be obtained during the molding of the foam.

In addition, preferably, the crosslinking agent used in the present invention is an organic peroxide crosslinking agent, specifically, it may be one or more selected from among 1,1-di-(t-butylperoxy)-3,3,5-trimethylcyclohexane, t-butyl cumyl peroxide, dicumyl peroxide (DCP), 2,5-dimethyl-2,5-di(t-butylperoxyl) hexane, and 1,3-bis(t-butylperoxyl-isoprophyl) benzene.

Further, the foaming agent used in the present invention is a typical foaming agent, and may be one or more selected from among azodicarbonamide, p,p'-oxybis(benzene sufonyl hydrazide), and p-toluene sufonyl hydrazide.

The amounts of additives added, such as a softener, a filler, a crosslinking agent and a foaming agent, are conventional amounts and are not necessarily limited to the above-specified ranges. The amounts of additives added may be suitably adjusted depending on the intended use of the resulting foam.

In the step of processing the second mixture into the compound, the second mixture is processed into a shape suitable for a molding device. For press molding, the second mixture is processed into a sheet form by use of a calender or the like, and for injection molding, the second mixture is processed into a pellet form. This step is also performed at a temperature of 80 to 110°C in view of the heat sensitivity of the crosslinking agent and the foaming agent.

The step of molding the compound is performed by press molding or injection molding. Press molding is performed at a temperature of 150 to 155°C, and the press-molding time is adjusted depending on the inner diameter of mold used. Generally, the press-molding time corresponds to two times the thickness of the mold. For example, when the inner diameter of the mold is 15 mm, the press-molding time is 30 minutes or less, and when the inner diameter of the mold is 20 mm, the press-molding time is 40 minutes or less. Injection molding is generally performed at a temperature of about 170°C for about 7 to 10 minutes, and under such temperature and time conditions, crosslinking and foaming are normally performed. In the case of injection molding in which raw materials are injected in a melted state, the temperature of an injector that transfers the raw materials is 80 to 110°C in view of the heat sensitivity of the crosslinking agent and the foaming agent.

As a crosslinking agent and a foaming agent, which are used for EVA-based foams, materials are used which are stable at the temperature of processing device used and which can chemically react at the temperature of a molding device. Specifically, as the crosslinking agent, a peroxide having a half-life temperature of about 170°C, for example, dicumyl peroxide, is used, and as the foaming agent, an azodicarbonamide-based compound or an OBSH-based compound, which has a decomposition temperature of 135 to 165°C is used for press molding, and an azodicarbonamide-based compound having a decomposition temperature of about 200°C is used for injection molding.

When the thermoplastic polyurethane (TPU) according to the present invention is used, stable EVA-based foam can be produced through mixing, processing and press molding or injection molding by use of the crosslinking agent and the foaming agent as described. Furthermore, the produced foam may have a specific gravity ranging from a low specific gravity of 0.1 or lower to a high specific gravity of 0.5 or higher, depending on the amount of the foaming agent used. In addition, the produced foam may have various hardnesses depending on the soft segment and hard segment contents of the TPU.

Hereinafter, the thermoplastic polyurethane imparted with crosslinking sites according to the present invention will be described in further detail with reference to examples and comparative examples. It will be obvious to a person having ordinary skill in the art that these examples and comparative examples are illustrative purposes only to describe the present invention in further detail and are not to be construed to limit the scope of the present invention.

### 1. Production of Thermoplastic Polyurethane Imparted with Crosslinking Sites

With respect to raw materials, as a saturated polyol, polytetramethylene glycol having a hydroxyl value of 56.1 mg KOH/g was used in view of the hydrolysis resistance and elastic properties of the resulting foam, and as a saturated chain extender, diethylene glycol was used. As an unsaturated polyol, polybutadiene diol having a hydroxyl value of 47.1 mg KOH/g was used, and as an unsaturated chain extender, glycerol monoaryl ether (GAE) was used alone or a 1: 1 mixture of glycerol monoaryl ether (GAE) and trimethylolpropane monoaryl ether (TMPME) was used. As a polyisocyanate, diphenylmethane diisocyanate (MDI) was used.

With respect to production conditions, in view of the proper viscosity of polytetramethylene glycol polyol and its reactivity with polyisocyanate, a first mixing step of mixing the polyol with a chain extender with stirring was performed at 60°C for 3 minutes, and a second mixing step of adding and mixing polyisocyanate was performed at 500 rpm for 6 minutes. The product resulting from the second mixing step was aged at a temperature of 120°C for 6 hours. The slab-shaped product resulting from the aging step was cut to a suitable size without being subjected to a crushing process, thereby producing a thermoplastic polyurethane imparted with crosslinking sites.

### Example 1

According to the raw materials and production conditions as described above, a thermoplastic polyurethane was produced using 60 parts by weight of a polyol, 10 parts by weight of a chain extender and 30 parts by weight of a polyisocyanate.

For production of the thermoplastic polyurethane, only a saturated polyol was used alone as the polyol, and glycerol monoaryl ether (GAE) that is a chain extender was used as the crosslinking site-imparting compound.

### Example 2

A thermoplastic polyurethane was produced under the same conditions as used in Example 1, except that only a saturated polyol that imparts crosslinking sites was used as the polyol and that glycerol monoaryl ether (GAE), an unsaturated chain extender that imparts crosslinking sites, was used in an amount of 20 mol% based on the total moles of the chain extender.

### Example 3

A thermoplastic polyurethane was produced under the same conditions as used in Example 1, except that only a saturated polyol was used as the polyol and that the unsaturated chain extender was used in an amount of 75 mol% based on the total moles of the chain extender. As the unsaturated chain extender, glycerol monoaryl ether (GAE) was used.

### Example 4

According to the raw materials and production conditions as described above, a thermoplastic polyurethane was produced using 45 parts by weight of a polyol, 15 parts by weight of a chain extender and 40 parts by weight of a polyisocyanate.

For production of the thermoplastic polyurethane, an unsaturated polyol that imparts crosslinking sites was used in an amount of 5 mol% based on the total moles of the polyol, and glycerol monoaryl ether (GAE) that is an unsaturated chain extender was used in an amount of 60 mol% based on the total moles of the chain extender.

### Example 5

According to the raw materials and production conditions as described above, a thermoplastic polyurethane was produced using 70 parts by weight of a polyol, 6 parts by weight of a chain extender and 24 parts by weight of a polyisocyanate.

For production of the thermoplastic polyurethane, an unsaturated polyol that imparts crosslinking sites was used in an amount of 15 mol% based on the total moles of the polyol, and a 1:1 mixture of glycerol monoaryl ether (GAE) that is an unsaturated chain extender and trimethylolpropane monoaryl ether (TMPME) was used in an amount of 40 mol% based on the total moles of the chain extender.

### Example 6

A thermoplastic polyurethane was produced under the same conditions as used in Example 5, except that the unsaturated polyol that imparts crosslinking sites was used in an amount of 20 mol% based on the total moles of the polyol and that a saturated chain extender was used alone as the chain extender.

### Comparative Example 1

A thermoplastic polyurethane was produced using the same saturated polyol and saturated chain extender as used in Example 1 in the same manner as described in Example 1, except that the compound that imparts crosslinking sites was not used.

### Comparative Example 2

A thermoplastic polyurethane was produced using the same saturated polyol and saturated chain extender as used in Example 4 in the same manner as described in Example 4, except that the compound that imparts crosslinking sites was not used.

### Comparative Example 3

A thermoplastic polyurethane was produced using the same saturated polyol and saturated chain extender as used in Example 5 in the same manner as described in Example 5, except that the compound that imparts crosslinking sites was not used.

### 2. Production of Crosslinked Foam Using Thermoplastic Polyurethane

A crosslinked foam was produced using the thermoplastic polyurethane produced in each of Examples 1 to 6 and Comparative Examples 1 to 3 as described in section 1 above.

### Example 7

100 Parts by weight of the thermoplastic polyurethane produced in Example 1 was melt-mixed with 0.3 parts by weight of stearic acid, 5 parts by weight of calcium carbonate and 1 part by weight of zinc oxide, which are additives, at a temperature of 90°C to prepare a first mixture. Then, 0.6 parts by weight of the crosslinking agent dicumyl peroxide and 1 part by weight of the foaming agent azodicarbonamide were added to and dispersed in the first mixture at a temperature of 80°C to prepare a second mixture. The second mixture was processed into a pellet form, and then injection-molded, thereby producing thermoplastic polyurethane foam.

### Example 8

100 Parts by weight of the thermoplastic polyurethane produced in Example 2 was melt-mixed with 0.3 parts by weight of stearic acid, 5 parts by weight of calcium carbonate and 1 part by weight of zinc oxide, which are additives, at a temperature of 100°C to prepare a first mixture. Then, 1.5 parts by weight of the crosslinking agent dicumyl peroxide and 1 part by weight of the foaming agent azodicarbonamide were added to and dispersed in the first mixture at a temperature of 90°C to prepare a second mixture. The second mixture was processed into a pellet form, and then injection-molded, thereby producing thermoplastic polyurethane foam.

### Example 9

100 Parts by weight of the thermoplastic polyurethane produced in Example 3 was melt-mixed with 0.3 parts by weight of stearic acid, 5 parts by weight of calcium carbonate and 1 part by weight of zinc oxide, which are additives, at a temperature of 120°C to prepare a first mixture. Then, 1.3 parts by weight of the crosslinking agent dicumyl peroxide and 1 part by weight of the foaming agent azodicarbonamide were added to and dispersed in the first mixture at a temperature of 100°C to prepare a second mixture. The second mixture was processed into a pellet form, and then injection-molded, thereby producing thermoplastic polyurethane foam.

### Example 10

100 Parts by weight of the thermoplastic polyurethane produced in Example 4 was melt-mixed with 1.0 parts by weight of stearic acid, 12 parts by weight of calcium carbonate and 5 part by weight of zinc oxide, which are additives, at a temperature of 130°C to prepare a first mixture. Then, 1.0 parts by weight of the crosslinking agent dicumyl peroxide and 12 part by weight of the foaming agent azodicarbonamide were added to and dispersed in the first mixture at a temperature of 110°C to prepare a second mixture. The second mixture was processed into a pellet form, and then injection-molded, thereby producing thermoplastic polyurethane foam.

### Example 11

100 Parts by weight of the thermoplastic polyurethane produced in Example 4 was melt-mixed with 1.0 parts by weight of stearic acid, 12 parts by weight of calcium carbonate and 5 part by weight of zinc oxide, which are additives, at a temperature of 130°C to prepare a first mixture. Then, 0.4 parts by weight of the crosslinking agent dicumyl peroxide and 12 part by weight of the foaming agent azodicarbonamide were added to and dispersed in the first mixture at a temperature of 110°C to prepare a second mixture. The second mixture was processed into a pellet form, and then injection-molded, thereby producing thermoplastic polyurethane foam.

### Example 12

100 Parts by weight of the thermoplastic polyurethane produced in Example 6 was melt-mixed with 1.0 parts by weight of stearic acid, 12 parts by weight of calcium carbonate and 5 part by weight of zinc oxide, which are additives, at a temperature of 130°C to prepare a first mixture. Then, 0.2 parts by weight of the crosslinking agent dicumyl peroxide and 12 part by weight of the foaming agent azodicarbonamide were added to and dispersed in the first mixture at a temperature of 110°C to prepare a second mixture. The second mixture was processed into a pellet form, and then injection-molded, thereby producing thermoplastic polyurethane foam.

### Comparative Example 4

Production of thermoplastic polyurethane foam was performed using the thermoplastic polyurethane of Comparative Example 1 in the same manner as described in Example 7. In this Example, the thermoplastic polyurethane was not properly mixed.

### Comparative Example 5

Production of thermoplastic polyurethane foam was performed using the thermoplastic polyurethane of Comparative Example 2 in the same manner as described in Example 7. In this Example, the thermoplastic polyurethane was not properly mixed.

### Comparative Example 6

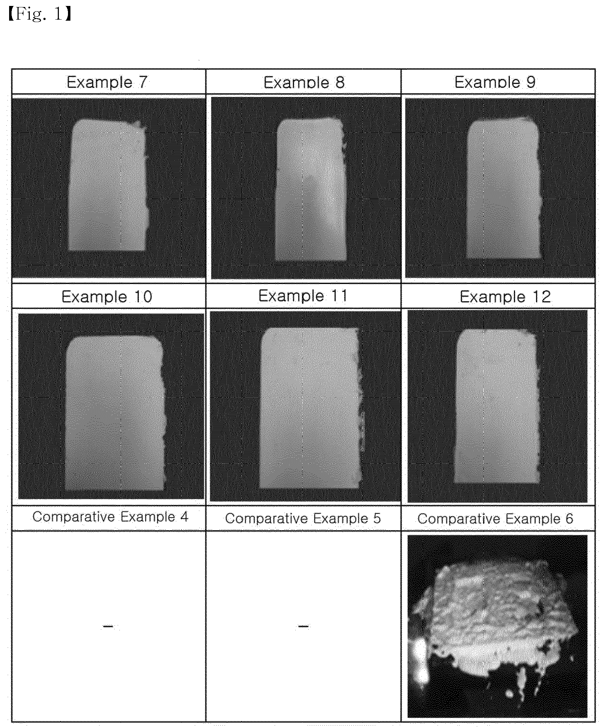

Production of thermoplastic polyurethane foam was performed using the thermoplastic polyurethane of Comparative Example 3 in the same manner as described in Example 10. In this Comparative Example, the thermoplastic polyurethane could be mixed, but dough as shown in a photograph of FIG. 1 was obtained. In this Comparative Example, the crosslinking agent dicumyl peroxide was added in an amount of 1.5 parts by weight based on 100 parts by weight of the thermoplastic polyurethane.

### 3. Evaluation of Produced Thermoplastic Polyurethane Foams

The processabilities and physical properties of the thermoplastic polyurethane foams of Examples 7 to 12 and Comparative Examples 4 to 6, produced according to the method of section 2 above using the thermoplastic polyurethanes of Examples 1 to 6 and Comparative Examples 1 to 3 produced according to the method of section 1 above, were evaluated, and the results of the evaluation are shown in Table 1 below.

**Table 1**

| | | Examples | | | | | | Comparative Examples | | |
|---|---|---|---|---|---|---|---|---|---|---|
| | | 7 | 8 | 9 | 10 | 11 | 12 | 4 | 5 | 6 |
| Flow beginning temperature¹⁾ (°C) | | 85 | 93 | 88 | 97 | 105 | 107 | 143 | 158 | 132 |
| Foaming processability²⁾ | | ○ | ○ | ○ | ○ | ○ | ○ | Not miscible | Not miscible | Δ |
| Foam | Appearance³⁾ | ○ | ○ | ○ | ○ | ○ | ○ | - | - | × |
| | Degree of crosslinking⁴⁾ | ○ | ○ | ○ | ○ | ○ | ○ | - | - | × |
| | Specific gravity⁵⁾ | 0.534 | 0.563 | 0.514 | 0.082 | 0.064 | 0.072 | - | - | - |
| | Expansion ratio⁶⁾ (%) | 138 | 136 | 140 | 198 | 222 | 208 | - | - | - |
| | Tensile strength⁷⁾ (:kgf/cm²) | 53 | 62 | 48 | 18 | 12 | 14 | - | - | - |
| | Tear strength⁸⁾ (kgf/ cm) | 28.0 | 28.2 | 28.7 | 1.2 | 0.9 | 1.0 | - | - | - |
| 1) Flow beginning temperature: the temperature at which the heated thermoplastic polyurethane began to flow after softening was measured using a capillary rheometer. | | | | | | | | | | |
| 2) Processability: the mixing state of the thermoplastic polyurethane and the additives during production of the foam was visually observed (○: uniformly mixed, Δ: moderate, ×: not uniformly mixed). | | | | | | | | | | |
| 3) Appearance: the molded shape of the produced foam was visually observed (○: good surface state and cell formation, Δ: moderate, ×: non-uniform surface state and cell formation). | | | | | | | | | | |
| 4) Degree of crosslinking: evaluated using an oscillating disc rheometer (ODR) (○: good, Δ: moderate, ×: poor). | | | | | | | | | | |
| 5) Specific gravity: measured five times using an automated specific gravity meter and averaged. | | | | | | | | | | |
| 6) Expansion ratio: the expansion ratio of the foam was calculated using the following equation: | | | | | | | | | | |
| ER=f1/m1 | | | | | | | | | | |
| ER: expansion ratio | | | | | | | | | | |
| f1=length of cooled foam | | | | | | | | | | |
| m1=mold length. | | | | | | | | | | |
| 7) Tensile strength: measured for an about 3-mm thick specimen prepared using No. 2 cutter in accordance with KS M6518. | | | | | | | | | | |
| 8) Tear strength: measured in accordance with KS M6518. | | | | | | | | | | |

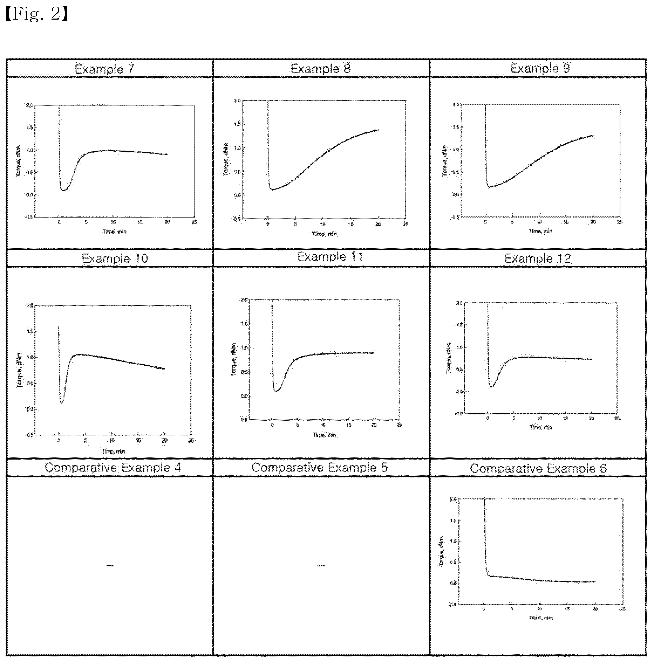

As shown in Table 1 above, in the case of the foams of Examples 7 to 12, produced using the thermoplastic polyurethanes of Examples 1 to 6, the thermoplastic polyurethane was easily mixed with the foaming agent and the crosslinking agent, as shown in the photographs of FIG. 1. However, in the case of the products of Comparative Examples 4 and 5, produced using the thermoplastic polyurethanes of Comparative Examples 1 and 2, the thermoplastic polyurethane could not be mixed with the foaming agent and the crosslinking agent so that no foam could be produced, and in the case of the product of Comparative Example 6, produced using the thermoplastic polyurethane of Comparative Example 3, the thermoplastic polyurethane could be mixed, but the foam was obtained in a dough-like state, as shown in the photograph of FIG. 1. As can be seen from the graphs of FIG. 2, in Examples 7 to 12 according to the present invention, crosslinking was induced by the peroxide, but in Comparative Example 6, no crosslinking occurred, suggesting that no foam was produced.

As can be seen in FIG. 2, in Examples 7 to 12, the torque value (y-axis) increased with time (x-axis) at a temperature of 170°C, suggesting that crosslinking occurred, but in Comparative Example 6, the torque value did not increase with time, suggesting that no crosslinking occurred.

In addition, it was shown that the foams of Examples 7 to 12, obtained by mixing the thermoplastic polyurethane with the crosslinking agent and the foaming agent, had a good cell state and a high degree of crosslinking and were excellent in terms of physical properties, including specific gravity, expansion ratio, tensile strength and tear strength.

For reference, FIG. 1 depicts photographs showing the appearances of thermoplastic polyurethanes according to the present invention and thermoplastic polyurethanes according to Comparative Examples after kneading, and FIG. 2 depicts graphs showing the cross-linking properties of the thermoplastic polyurethane foams of Examples 7 to 12 according to the present invention and the foam of Comparative Example 6.

Although the thermoplastic polyurethane composition imparted with crosslinking sites according to the preferred embodiment of the present invention has been described for illustrative purposes, those skilled in the art will easily appreciate that various changes and modifications are possible without departing from the technical idea of the present invention.

While the thermoplastic polyurethane composition imparted with crosslinking sites according to the preferred embodiments of the present invention has been described and illustrated in connection with specific exemplary embodiments with reference to the accompanying drawings, it will be readily appreciated by those skilled in the art that it is merely illustrative of the preferred embodiments of the present invention and various modifications and changes can be made thereto without departing from the technical spirit and scope of the present invention.

### BEST MODE

The present invention provides a thermoplastic polyurethane composition imparted with crosslinking sites, which comprises a long-chain polyol, a short-chain chain extender and a polyisocyanate, and contains a crosslinking site-imparting compound.

In addition, the crosslinking site-imparting compound may be a crosslinking site-imparting polyol or a crosslinking site-imparting chain extender, which has at least one ethylenically unsaturated group in its molecular side chain and contains a carbon-carbon double bond, and the ethylenically unsaturated group may be an acryl group or an acryloyl group.

Besides, the present invention provides a method for producing a crosslinked foam using a thermoplastic polyurethane imparted with crosslinking sites, the method comprising the steps of: melt-mixing a thermoplastic polyurethane with a softener and a filler, which are heat-stable additives, at a temperature of 90 to 130°C to prepare a first mixture; dispersing a crosslinking agent and a foaming agent, which are heat-sensitive additives, in the first mixture at a temperature of 80 to 110°C to prepare a second mixture; processing the second mixture into a sheet- or pellet-shaped compound; and press- or injection-molding the compound to produce a foam.

### INDUSTRIAL APPLICABILITY

The thermoplastic polyurethane composition imparted with crosslinking sites according to the present invention is easy to process at a processing temperature of about 130°C or below in a low-temperature foaming process that is performed using an existing EVA crosslinking/foaming system, and a foam having varying specific gravities can be produced using the thermoplastic polyurethane composition. Thus, the present invention is expected to be widely applied to all the materials used in the industrial fields.

## Claims

1. A thermoplastic polyurethane composition imparted with crosslinking sites, which comprises a long-chain polyol, a short-chain chain extender and a polyisocyanate, **characterized in that** the thermoplastic polyurethane composition contains a crosslinking site-imparting compound.

2. The thermoplastic polyurethane composition imparted with crosslinking sites according to claim 1, **characterized in that** the crosslinking site-imparting compound is a crosslinking site-imparting polyol or a crosslinking site-imparting chain extender, which has at least one ethylenically unsaturated group in its molecular side chain and contains a carbon-carbon double bond.

3. The thermoplastic polyurethane composition imparted with crosslinking sites according to claim 1, **characterized in that** the polyol is a saturated polyol, and the chain extender is selected from among a crosslinking site-imparting chain extender and a mixture of a saturated chain extender and a crosslinking site-imparting chain extender.

4. The thermoplastic polyurethane composition imparted with crosslinking sites according to claim 1, **characterized in that** the polyol is a mixture of a saturated polyol and a crosslinking site-imparting polyol, and the chain extender is selected from among a saturated chain extender, a crosslinking site-imparting chain extender, and a mixture of a saturated chain extender and a crosslinking site-imparting chain extender.

5. The thermoplastic polyurethane composition imparted with crosslinking sites according to claim 2, **characterized in that** the ethylenically unsaturated group is an acryl group or an acryloyl group.

6. The thermoplastic polyurethane composition imparted with crosslinking sites according to claim 2, **characterized in that** the crosslinking site-imparting polyol is an unsaturated polyol and the crosslinking site-imparting chain extender is an unsaturated chain extender.

7. The thermoplastic polyurethane composition imparted with crosslinking sites according to claim 3, **characterized in that** the crosslinking site-imparting chain extender contained in the mixture is an unsaturated chain extender, of which the content is 20 to 100 mol% based on the total moles of the chain extenders (saturated chain extender + unsaturated chain extender).

8. The thermoplastic polyurethane composition imparted with crosslinking sites according to claim 4, **characterized in that** the crosslinking site-imparting chain extender contained in the mixture is an unsaturated chain extender, of which the content is 0 to 75 mol% based on the total moles of the chain extenders (saturated chain extender + unsaturated chain extender).

9. The thermoplastic polyurethane composition imparted with crosslinking sites according to claim 4, **characterized in that** the crosslinking site-imparting polyol contained in the mixture is an unsaturated polyol, of which the content is 5 to 20 mol% based on the total moles of the polyols (saturated polyol + unsaturated polyol).

10. The thermoplastic polyurethane composition imparted with crosslinking sites according to claim 1, **characterized in that** the reaction ratio between an isocyanate component and polyol and chain extender components [NCO/OH] is 0.85-1.00.

11. The thermoplastic polyurethane composition imparted with crosslinking sites according to claim 9, **characterized in that** the saturated polyol is a random polyester polyol or a polyether polyol,
**in that** the random polyester polyol is a polyester polyol produced by an addition reaction between at least one polyfunctional carboxylic acid compound or an anhydride thereof, selected from among sebacic acid (SA), adipic acid (AA), suberic acid, abelic acid, azelic acid, dodecandioic acid, trimeric acid, terephthalic acid and phthalic anhydride, and at least one polyfunctional alcohol compound selected from diols, including ethylene glycol, diethylene glycol, butanediol and hexandiol, and triols, including trimethylol propane and the like, and
**in that** the polyether polyol is one or more selected from among polyethylene glycol, polypropylene glycol, polytetramethylene glycol, and copolymers thereof.

12. The thermoplastic polyurethane composition imparted with crosslinking sites according to claim 9, **characterized in that** the unsaturated polyol is an unsaturated polyester polyol or an unsaturated polyether polyol, which has two hydroxyl groups in the molecule and a number-average molecular weight of 500 to 6,000, and is generally used in the production of unsaturated polyurethane,
**in that** the unsaturated polyester polyol is a compound produced by reacting saturated carboxylic acid and unsaturated carboxylic acid with polyfunctional alcohol at a certain ratio so as to have at least one unsaturated bond in the main chain, and
**in that** each of the polyfunctional alcohol and the saturated carboxylic acid is at least one or a mixture of two or more selected from among those described above with respect to the saturated polyol, and the unsaturated carboxylic acid is one or more selected from among fumaric acid, maleic acid, maleic anhydride, citraconic acid and itaconic acid.

13. The thermoplastic polyurethane composition imparted with crosslinking sites according to claim 7 or 8, **characterized in that** the saturated chain extender contains two or more active hydrogen atoms, and is one or more selected from among diols, including ethylene glycol, diethylene glycol, butanediol and hexandiol, triols, including trimethylol propane and the like, and polytetramethylene glycol.

14. The thermoplastic polyurethane composition imparted with crosslinking sites according to claim 7 or 8, **characterized in that** the unsaturated chain extender is a low-molecular-weight polyol containing an ethylenically unsaturated group, i.e., an allyl group or an acryloyl group, and having a number-average molecular weight of 500 or less, and
**in that** the unsaturated chain extender is one or more selected from among glycerol monoallyl ether, trimethylolpropane monoallyl ether, glycerol monoacrylate, trimethylolpropane monoacrylate and similar compounds, which contain an unsaturated group in C₄-C₂₀ aliphatic polyol, or one or more selected from among alkylene oxide and allyl glycidyl ether adducts of C₂-C₁₂ polyol.

15. A method for producing a crosslinked foam using a thermoplastic polyurethane imparted with crosslinking sites, **characterized in that** the method comprises the steps of:
melt-mixing a thermoplastic polyurethane with a softener and a filler, which are heat-stable additives, at a temperature of 90 to 130°C to prepare a first mixture;
dispersing a crosslinking agent and a foaming agent, which are heat-sensitive additives, in the first mixture at a temperature of 80 to 110°C to prepare a second mixture;
processing the second mixture into a sheet- or pellet-shaped compound; and
press- or injection-molding the compound to produce a foam.

16. The method according to claim 15, **characterized in that** the thermoplastic polyurethane contains a crosslinking site-imparting compound in a composition comprising a long-chain polyol, a short-chain chain extender and a polyisocyanate.
